# EUROPEAN PATENT APPLICATION

(11) **EP 1 179 814 A1**
(43) Date of publication of application: **13.02.2002**
(21) Application number: 00306705.5
(22) Date of filing: 07.08.2000
(51) Int. Cl.: G07F 7/08, G07F 5/18

(54) **Method and apparatus for performing value transactions**

(71) Applicant: Mars Incorporated, McLean, Virginia 22101-3883 (US)
(72) Inventor: Campbell, Bernard Joseph, Hampshire, RG27 OED (GB); Allan, Richard Douglas, Berkshire, RG5 3BG (GB)
(74) Representative: Burke, Steven David

(57) **Abstract**

A transaction system comprises at least one vending machine for providing products, at least one revaluation terminal and portable data-storing devices which can be read by the vending machine and the revaluation terminal, the revaluation terminal storing a first identifier (e.g. a site operator's e-mail address) and being operable to (i) read a second identifier (e.g. a customer's e-mail address) from a said portable data-carrying device, (ii) establish communication with a predetermined internet site, the communication involving transferring the first and second identifiers to the site, and (iii) increase a credit value stored on the data-carrying device in response to receipt of an acknowledgement of the transfer, the data-carrying device permitting the vending machine to decrement its stored credit value in exchange for dispensing a product or products. Thus vending payments are made automatically from a user's account. The system can be modified so that payment is requested by the vending machines, so stored credit and revaluation terminals are not needed.

## Description

This invention relates to methods and apparatus for performing value transactions, and particularly, but not exclusively, to vending machines.

Conventional vending machines dispense products or perform services in exchange for cash deposited in the machine. Some machines can be operated by portable data-carrying devices, such as smart cards, which contain a credit value forming "electronic cash". The stored electronic cash is decremented in accordance with the value of the dispensed products or service, and can be replenished using a revaluation terminal. Normally, the user has to insert genuine cash into the revaluation terminal, but it is known also to provide a system whereby the payment for the electronic cash is deducted directly from the wages of the user. This latter system would normally be a closed site system in which the revaluation terminals and vending machines are accessible only to employees of a certain organisation.

It would be desirable to provide a more versatile and convenient system for enabling transactions.

Aspects of the present invention are set out in the accompanying claims. In accordance with a preferred embodiment, a portable data-carrying device, such as a smart card, stores an identifier which identifies the user or owner of the card. For reasons which will become apparent, this identifier is preferably in the form of the user's e-mail address. The card is presented to a revaluation terminal, and this terminal is operable to communicate with a predetermined internet site, during the course of which communication the terminal automatically sends to the internet site the identifier which is read from the smart card, and a further identifier which is stored in the terminal and which identifies the owner, or operator, of the revaluation terminal.

The internet site is arranged for automatically transferring funds between an account associated with the card user, which account is identified using the identifier read from the card, and the terminal operator's account, which is identified by the identifier stored in the terminal. The internet site sends an acknowledgement back to the terminal, and in response to this the terminal increments the credit value stored on the smart card by an amount corresponding to the value transferred between the card user's account and the terminal operator's account.

Using such a system, it is possible for card users to replenish the electronic cash on their cards in a simple manner, without requiring insertion of genuine cash, and in a system which does not have to be confined to closed site usage.

In the arrangement described above, the replenished smart card can then be used to obtain products or services using vending machines which are capable of accepting electronic cash. However, the invention also extends to an alternative arrangement, which avoids the need for revaluation terminals or electronic cash.

In accordance with the alternative arrangement, a vending machine is arranged to communicate with an internet site, in a corresponding manner to the revaluation terminal mentioned above. Thus, the vending machine will read from a smart card an identifier, and, once a product or service has been selected by the card user, will transmit to the internet site the identifier read from the card, a further identifier representing the vending machine operator and a value representing the price of the selected product or service. On receiving an acknowledgement from the internet site, the vending machine authorises the dispensing of the product or the performance of the service. The internet site will arrange for the transfer of funds corresponding to the cost from the account of the card owner to that of the vending machine operator.

The internet site could be arranged to operate with both types of systems, i.e. to receive messages from both revaluation terminals and vending machines. Indeed, the messages may be of the same format, so, as far as the internet site is concerned, there will be no difference between the two systems.

Preferably, the data-carrying devices are capable of being used with both types of arrangement, i.e. ones in which the identifier is read by a revaluation terminal and ones in which the identifier is read by a vending machine. The advantage of this is that, if a vending machine operator is gradually replacing his stand-alone vending machines with ones capable of communicating with the internet site, there will be no need to replace the smart cards of the users. The smart cards may be arranged so that they can always operate with both vending machines and revaluation terminals, or may be arranged so that they operate only with revaluation terminals until they are switched to a separate mode for operating with vending machines, after which they no longer premit the credit stored thereby to be increased. This could for example occur the first time the card is inserted into a vending machine capable of reading the identifier from the card and transmitting it to the internet site. Alternatively, if the stand-alone vending machines on a site are progressively being altered or replaced such that the resulting machines are capable of reading the card identifier and transmitting it to the internet site, the last vending machine to provide this capability may be arranged to switch received cards to the separate mode.

The arrangement may be such that, for any cards storing credit, the modeswitching operation is deferred until no credit remains. Alternatively, any remaining credit may be transferred to the card holder's account by issuing an appropriate message to the internet site.

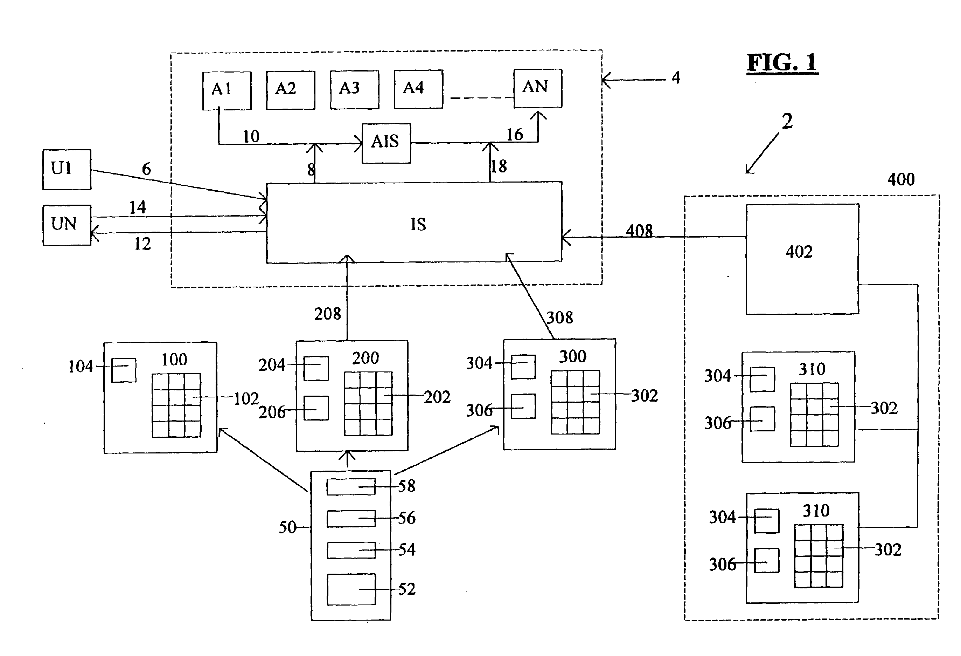

Arrangements embodying the invention will now be described by way of example with reference to the accompanying drawing, Figure 1, which schematically shows a transaction system according to the invention.

Referring to Figure 1, the transaction system 2 comprises a part shown in broken lines at 4, which forms a payment-transfer system and which operates in a similar manner to an existing payment-transfer system, accessible at the internet site www.paypal.com, which enables individuals to transmit funds between their bank accounts.

The system 4 operates as follows. Assuming that a user indicated at U1 wishes to transfer funds to a second individual, UN, he first registers with the internet site IS. During the course of this registration procedure, the internet site is provided with details of an account of the user U1, and authorisation to deduct funds from this account. The account may be a bank account or a credit card account, and is schematically represented at A1. Other user accounts registered with the internet site are indicated at A2, A3,....

When the user U1 wishes to make a payment to user UN, he sends an e-mail to the internet site IS, as indicated at 6. The internet site IS sends an acknowledgement back to user U1. Preferably, this acknowledgement forms part of the same communication initiated by the user U1, but it could be a separate message. The site IS instructs (as indicated at 8) a transfer 10 of funds from the account of the user U1 to an account AIS owned by the operator of the internet site IS. The internet site IS also notifies the intended recipient of the payment, UN, by sending an e-mail as indicated at 12 to the address specified in the instructions received from user U1. The recipient UN can then request, as indicated at 14, payment from the internet site IS. One way of achieving this would be to register with the internet site IS so that funds can be transferred directly from the account AIS of the internet site to an account AN of the recipient, as indicated at 16, in response to instructions 18 from the site IS.

Thus, registered users can transfer funds between the accounts simply by an e-mail instruction from the one who wishes to pay. All communications by e-mail with the internet site IS can be made secure using conventional encryption techniques.

In the following, it will be assumed initially that a transaction system 2 according to the present invention uses a payment system as described above, and that all potential purchasers and vending machine operators are registered with the internet site IS.

Each potential purchaser is issued with a smart card such as that indicated at 50. The smart card 50 stores, in locations schematically indicated at 52, 54, 56 and 58, a credit value representing the amount of stored electronic cash, a first identifier which identifies the user and which preferably is in the form of a string containing the user's e-mail address, a security code and an operator code. The smart card is intended for use in terminals equipped with keypads to allow the card user to enter a Personal Identification Number (PIN), and the purpose of the security code is to authorise communication only with machines into which the correct PIN has been entered. The purpose of the operator code is to allow use of the smart card only with machines owned by a particular vending machine operator.

The smart card can be used in a conventional way with a vending machine 100. The card is inserted into the machine 100, a keypad 102 is operated to enter the PIN, a display 104 shows the amount of stored electronic cash on the card 50, the keypad 102 is operated to select a product for vending, and the product is dispensed. At the same time the value of the electronic cash is decremented by an amount equivalent to the cost of the product, and the display 104 is correspondingly updated.

The card 50 can also be inserted into a revaluation terminal 200. This has a keypad 202 for entering the PIN. Assuming that the correct PIN is entered, and that the operator code read out from storage location 58 matches an operator code stored within the revaluation terminal at 204, the card user is allowed to proceed with the process of increasing the value of the electronic cash stored on his card.

He operates the keypad 202 to indicate the amount by which the value is to be increased. Then, the machine 200 transmits by e-mail, as indicated at 208, a message to the internet site IS which contains the identifier (i.e. the e-mail address of the card owner) read from storage location 54, the requested value to be added to the card and a further identifier read from storage location 206 of the machine, this further identifier comprising an e-mail address of the vending machine/revaluation terminal operator.

The internet site IS transmits an acknowledgement as part of the communication (or in the form of a separate message). On receipt of the acknowledgement, the revaluation terminal 200 causes the electronic cash amount stored on the card 50 to be increased by the requested value.

The internet site IS will then arrange for transfer of funds from the account identified by the card user's e-mail address to the account identified by the vending machine operator's e-mail address, via the site account AIS.

The card 50 can additionally, or alternatively, be inserted into a vending machine 300. This has a keyboard 302 allowing the card user to enter his PIN, and further allowing selection of a product for vending . The vending machine 300 operates in a similar manner to the revaluation terminal 200, in that it checks the operator code retrieved from the card against a code stored at 304, and transmits to the internet site IS a message containing the card owner's e-mail address from card location 54, the vending machine operator's e-mail address as stored in the vending machine at location 306, and a value corresponding to the cost of the requested products, the message being indicated at 308. On receiving an acknowledgement, the vending machine authorises dispensing of the requested products. The internet site IS arranges for transfer of the appropriate funds from the card owner's account to the vending machine operator's account via the site account AIS.

It will be noted that, in this case, there is no requirement for the smart card 50 to store electronic cash. Accordingly, the cards used for operating the vending machine 300 may be different from those used with machines 100 and 200. However, in the preferred embodiment, the cards used with machines 100 and 200 can additionally be used with the vending machine 300, although in this case no value is required to be stored as electronic cash.

The described system may have, in addition to or instead of the described vending machine 300, other vending machines 310 which are similar to the machine 300 except that they are terminals of a Local Area Network 400. In this case, the machines 310 could communicate with the internet site IS via a LAN communications server 402, as indicated at 408.

The stand-alone vending machine 100 could be replaced by a vending machine 300. Preferably, if there are then no other stand-alone vending machines 100 arranged to operate cards having the same operator code, this vending machine 300 is arranged to alter a flag stored on each card inserted therein which can be detected by a revaluation terminal to inhibit operation therewith. Also, the vending machine 300 transmits a message to the internet site IS to transfer funds, in the amount of any existing credit on the card, from the account of the operator to that of the cardholder, and clears the credit stored on the card.

Various modifications are possible to the arrangements described above. For example, the internet site IS may be different from the one described previously, in that it may not permit registration of members (U1, UN) of the public, but instead only allow registration of specific individuals as selected by a vending machine operator or a group of vending machine operators. Indeed, the internet site may be owned by one or more vending machine operators.

The smart card may be issued by the owner of the internet site IS, or by the or each vending machine operator, in which case the internet site owner or the vending machine operator may carry out the initial registration process using information acquired from the prospective card owner.

The system may store user and/or operator identifiers in other forms than e-mail addresses. They may be arbitrary codes which can be deciphered by the internet site IS to identify the relevant accounts, or Internet Protocol addresses. The use of e-mail addresses is preferred, however, because there are well-established techniques for interpreting and handling them, they are widely-used and easy for the users to obtain and they are not limited by association with specific IP addresses.

The system may be applied to payphones. Preferably, at the beginning of the call, the payphone connects to the internet site and requests transfers of a predetermined amount of money, which could be fixed or could be selected by the user of the payphone, for example by operating the dialling keypad, which would also be used for entering the PIN. On receipt of an acknowledgement, the payphone allows use for a period corresponding to the value transferred. At the end of that period, the payphone can then connect again to the internet site to request a further transfer and thus, on acknowledgement, allow a further period of use, possibly after requesting that the user first confirm that this is desired. This could be repeated indefinitely.

The above description assumes that revaluation terminals and vending machines are separate. However, a vending machine may be provided with a revaluation function.

## Claims

1. A machine for providing products, services or value, the machine storing a first identifier and being operable to (i) read a second identifier from a portable data-carrying device, (ii) establish communication with a predetermined internet site, the communication involving transferring the first and second identifiers to the site, and (iii) dispense a product, a service or value in response to receipt of an acknowledgement of the transfer, at least the second identifier being resolvable as an IP address.

2. A machine as claimed in claim 1, wherein the second identifier is an internet e-mail address.

3. A machine as claimed in claim 1 or 2, wherein the machine is a revaluation terminal which is operable to increase a credit value stored on the device in response to the acknowledgement.

4. A machine as claimed in claim 1 or 2, wherein the machine is a vending machine and is operable to dispense a product or perform a service in response to the acknowledgement.

5. A machine for providing products or services, the machine storing a first identifier and being operable to (i) read a second identifier from a portable data-carrying device, (ii) establish communication with a predetermined internet site, the communication involving transferring the first and second identifiers to the site, and receiving an acknowledgement, and (iii) dispense a product or a service in response to receipt of an acknowledgement, the machine being further operable to alter data on the card indicative of whether a credit value on the card is allowed to be subsequently increased.

6. A machine as claimed in claim 5, wherein the second identifier is resolvable as an IP address.

7. A machine as claimed in claim 6, wherein the second identifier is an internet e-mail address.

8. A machine as claimed in claim 5, 6 or 7, wherein the machine is further operable to read the credit value and transmit it to the predetermined internet site.

9. A machine as claimed in claim 8, wherein the machine is operable to clear the credit value.

10. A machine as claimed in any preceding claim, wherein the machine has means permitting a user to enter a security code for the purpose of enabling access to the second identifier stored on the data-carrying device.

11. A machine as claimed in any preceding claim, wherein the machine is connected to a local area network, and is operable to communicate with the predetermined internet site via the network.

12. A machine as claimed in any preceding claim, wherein the first identifier is resolvable as an IP address.

13. A machine as claimed in any preceding claim, the machine being operable to read from the device a third identifier, and being operable to establish said communication with the predetermined internet site in dependence upon the value of said third identifier.

14. A portable data-carrying device, for use with a machine as claimed in any preceding claim, the device storing said second identifier.

15. A device as claimed in claim 14, wherein the device is operable to provide the second identifier to the machine in response to a security code provided by the machine.

16. A device as claimed in claim 14 or claim 15, the device storing a credit value which can be incremented and/or decremented by the machine.

17. A transaction system comprising at least one vending machine for providing products, at least one revaluation terminal and portable data-storing devices which can be read by the vending machine and the revaluation terminal, the revaluation terminal storing a first identifier and being operable to (i) read a second identifier from a said portable data-carrying device, (ii) establish communication with a predetermined internet site, the communication involving transferring the first and second identifiers to the site, and (iii) increase a credit value stored on the data-carrying device in response to receipt of an acknowledgement of the transfer, the data-carrying device permitting the vending machine to decrement its stored credit value in exchange for dispensing a product or products.
